# EUROPÄISCHE PATENTSCHRIFT

(11) **EP 0 800 252 B1**
(45) Veröffentlichungstag und Bekanntmachung des Hinweises auf die Patenterteilung: **25.08.2004**
(21) Anmeldenummer: 97106773.1
(22) Anmeldetag: 24.04.1997
(51) Int. Cl.: H02J 9/06

(54) **Unterbrechungsfreie Spannungsversorgungsvorrichtung mit mehreren Festspannungsladeeinrichtungen**
Uninterrupted voltage supply having several constant-voltage charging devices
Dispositif d'alimentation en tension sans interruption ayant plusieurs dispositifs de chargement à tension constante

(30) Priorität: 07.05.1996 DE 19618199
(43) Veröffentlichungstag der Anmeldung: 08.10.1997
(73) Patentinhaber: Michael Riedel Transformatorenbau Elektronik GmbH, 74532 Ilshofen (DE)
(72) Erfinder: Priebe, Arnold, 74542 Braunsbach (DE)
(74) Vertreter: Steil, Christian, Dipl.-Ing.

(56) Entgegenhaltungen:
- EP-A- 0 665 627
- EP-A- 0 695 017
- DE-A- 3 810 397
- US-A- 4 297 629
- US-A- 4 315 162
- US-A- 5 424 936

## Beschreibung

Die vorliegende Erfindung betrifft eine unterbrechungsfreie Spannungsversorgungsvorrichtung nach Oberbegriff des Anspruchs 1.

Die Erfindung betrifft ferner ein Verfahren zum Betreiben einer solchen unterbrechungsfreien Spannungsversorgungsvorrichtung.

Eine derartige unterbrechungsfreie Spannungsversorgungsvorrichtung bzw. ein derartiges Verfahren sind bekannt aus der US-A-4,297,629.

Solche unterbrechungsfreien Spannungsversorgungsvorrichtungen sind allgemein bekannt und werden häufig mit der Abkürzung USV bezeichnet.

Das Anwendungsgebiet der unterbrechungsfreien Spannungsversorgungsvorrichtungen ist außerordentlich groß. Überall dort, wo der Ausfall einer regulären Spannungsquelle aus den verschiedensten Gründen nicht hingenommen werden kann, dient eine unterbrechungsfreie Spannungsversorgungsvorrichtung zur Sicherstellung der Spannungsversorgung für einen begrenzten Zeitraum, wenn die reguläre Spannungsquelle ausfällt.

"Kern" einer jeden unterbrechungsfreien Spannungsversorgungsvorrichtung ist ein Energiespeicher, üblicherweise ein Speicher für elektrische Energie. Gewöhnlich werden Akkumulatoren verwendet, die bekannterweise einen guten Kompromiß zwischen Kosten, Lebensdauer und Kapazität darstellen. Akkumulatoren stellen generell eine Gleichspannung bereit und werden mit einer Gleichspannung geladen. Aus diesem Grund weisen unterbrechungsfreie Spannungsversorgungsvorrichtungen, die Akkumulatoren als Energiespeicher verwenden, generell eine Gleichspannungsversorgung auf. Es versteht sich jedoch, daß diese Gleichspannungsversorgung über geeignete Umrichter mit einer Wechselstromversorgung verbunden sein kann, um z.B. die Netzspannung abzupuffern.

Um sicherzustellen, daß die Akkumulatoren ständig voll aufgeladen sind, um ggf. die volle Kapazität bereitstellen zu können, weisen die unterbrechungsfreien Spannungsversorgungsvorrichtungen eine Ladeeinrichtung auf, die, gespeist aus der regulären Spannungsversorgung, den Akkumulator ständig im vollgeladenen Zustand hält. Hierzu ist es entscheidend, daß der Akkumulator von der Ladeeinrichtung mit einer Spannung versorgt wird, die etwas höher ist als die Nennspannung des Akkumulators. Die Höhe dieser sogenannten Ladeschlußspannung hängt vom Akkumulatortyp ab. Bei einem bekannten Akkumulator mit einer Nennspannung von 24 Volt beträgt die Ladeschlußspannung 27,6 Volt. Dieser Umstand verursacht, daß die bekannten unterbrechungsfreien Spannungsversorgungsvorrichtungen relativ teuer sind. Denn die reguläre Spannungsversorgung, die von der unterbrechungsfreien Spannungsversorgungsvorrichtung abzupuffern ist, stellt lediglich eine Spannung bereit, die gleich der Nennspannung des Akkumulators ist. Daher muß diese Spannung in der Ladeeinrichtung auf die über der Nennspannung liegende Ladeschlußspannung hochgesetzt werden. Die hierzu notwendigen Gleichstromumsetzer tragen wesentlich zu den hohen Gesamtkosten der unterbrechungsfreien Spannungsversorgungsvorrichtungen bei.

Aus der DE-AS 20 61 120 ist ein Gleichstromversorgungssystem zur unterbrechungsfreien Speisung eines Verbrauchers mit konstanter Gleichspannung aus einem ein- oder mehrphasigen Wechselstromnetz bekannt. Das System weist einen ungeregelten Hauptgleichrichter, eine Reservebatterie und Zusatzgleichrichter zur Konstanthaltung der Lade- bzw. Ladeerhaltungsspannung für die Batterie und der Spannung für den Verbraucher auf. Zwischen den Hauptgleichrichter und die Batterie ist eine aus einem Wechselrichter mit nachgeschaltetem Gleichrichter gebildete, von der Batteriespannung beeinflußte und bedarfsweise positive oder negative Ausgangsspannung liefernde, erste Ausgleichseinrichtung geschaltet. Zwischen den Hauptgleichrichter und den Verbraucher ist eine gleichartige, jedoch von der Verbraucherspannun^{g} beeinflußte zweite Ausgleichseinrichtung geschaltet.

Weiterhin ist aus der DE 38 10 397 C2 eine Stromversorgung mit mindestens zwei in Reihe geschalteten Batterien bzw. Akkumulatoren zur Strom- bzw. Spannungsversorgung für ein elektrisches Gerät bekannt. Zu jeder Batterie bzw. zu jedem Akkumulator ist eine Diode in Sperrichtung parallel geschaltet. Es ist nicht beschrieben, wie diese Batterien bzw. Akkumulatoren geladen werden.

Aus der US-A-4,315,162 ist eine unterbrechungsfreie Spannungsversorgungsvorrichtung für einen Mikrocomputer bekannt, die manuell zwischen einem "Lademodus" und einem "Standby-Modus" umgeschaltet werden kann. Die Vorrichtung weist zwei Akkumulatoren auf, deren Nennspannung jeweils kleiner ist als die Spannung der Gleichspannungsversorgung. In dem Lademodus sind die zwei Akkumulatoren parallel geschaltet, wobei die notwendige Ladespannung über einen Spannungsteiler aus der Gleichspannungsversorgung abgeleitet wird. Im Standby-Modus erfolgt ebenfalls bei Funktionieren der Gleichspannungsversorgung eine Erhaltungsladung. Falls die Gleichspannungsversorgung unter eine bestimmte Spannungsschwelle fällt, schaltet ein die Akkumulatoren seriell verbindender Bipolar-Transistor durch.

Aus der eingangs genannten US-A-4,297,629 ist eine unterbrechungsfreie Spannungsversorgungsvorrichtung bekannt, die zum Anschluß an eine, eine Versorgungsspannung bereitstellende Gleichspannungsversorgung ausgelegt ist. Die unterbrechungsfreie Spannungsversorgungsvorrichtung weist zwei Akkumulatoren auf, die im Akkumulatorbetrieb miteinander in Serie geschaltet mit der Gleichspannungsversorgung verbunden sind. Für die Akkumulatoren sind zwei aus der Gleichspannungsversorgung gespeiste Ladeeinrichtungen vorgesehen. Eine nur in eine Richtung leitfähige Einrichtung (Diode) verbindet dann, wenn die Gleichspannungsversorgung unterbrochen ist, die Akkumulatoren elektrisch mit den Anschlüssen der Gleichspannungsversorgung, um die Spannungsversorgung von daran angeschlossenen elektrischen Verbrauchern im Akkumulatorbetrieb unterbrechungsfrei aufrecht zu erhalten.

Vor diesem Hintergrund ist es die Aufgabe der vorliegenden Erfindung, eine verbesserte unterbrechungsfreie Spannungsversorgung sowie ein Verfahren zum Betrieb einer solchen anzugeben.

Diese Aufgabe wird bei der eingangs genannten unterbrechungsfreien Spannungsversorgungsvorrichtung durch die Merkmale des Anspruchs 1 gelöst.

Diese Aufgabe wird ferner durch ein Verfahren zum Betreiben einer solchen unterbrechungsfreien Spannungsversorgungsvorrichtung mit den Schritten des Anpruchs 13 gelöst. der Gesamtnennspannung. Aus diesem Grund läßt sich die Ladeschlußspannung außerordentlich einfach aus der entsprechenden Nennspannung der regulären Spannungsversorgungseinrichtung herleiten. Bekanntlich läßt sich aus einer vorgegebenen Spannung jede beliebige niedrigere Spannung durch einfachste schaltungstechnische Mittel bereitstellen, z.B. durch einen Spannungsteiler. Daher läßt sich die erfindungsgemäße unterbrechungsfreie Spannungsversorgungsvorrichtung sehr viel kostengünstiger herstellen als bekannte derartige Vorrichtungen, bei denen die Ladeschlußspannung auf schaltungstechnisch aufwendige Weise erzeugt werden muß.

Unter einem Akkkumulator soll vorliegend sowohl ein einzelner Akkumulator als auch ein seriell verschalteter Block von Einzelakkumulatoren verstanden werden.

Die Aufgabe wird somit vollkommen gelöst.

Erfindungsgemäβ ist für jeden der Akkumulatoren eine separate Ladeeinrichtung vorgesehen.

Durch diese Maßnahme können die Ladevorgänge der einzelnen Akkumulatoren unabhängig voneinander ausgeführt werden. Da es sich aus fertigungstechnischen Gründen nicht vermeiden läßt, daß auch Akkumulatoren desselben Typs unterschiedliche Innenwiderstände aufweisen, werden durch diese Maßnahme Überlastungen einzelner Akkumulatoren vermieden. Jeder Akkumulator kann voll aufgeladen werden.

Gemäß einer bevorzugten Ausführungsform weist die Vorrichtung zwei Akkumulatoren auf, deren Akkumulatornennspannung jeweils die halbe Nennspannung der Gleichspannungsversorgung beträgt.

Durch die Verwendung von nur zwei Akkumulatoren können die Kosten minimiert werden. Es können Akkumulatoren desselben Typs eingesetzt werden. Die Nennspannung der Gleichspannungsversorgung ist in jedem Fall höher als die Ladeschlußspannung jedes einzelnen Akkumulators.

Gemäß einer weiteren bevorzugten Ausführungsform ist eine Ladeeinrichtung zwischen einem negativen Pol des einen Akkumulators und der Steuereinrichtung und eine weitere Ladeeinrichtung zwischen einem positiven Pol des zweiten Akkumulators und der Steuereinrichtung angeschlossen, wobei ein positiver Pol des einen Akkumulators mit einem positiven Pol der Gleichspannungsversorgung und ein negativer Pol des zweiten Akkumulators mit einem negativen Pol der Gleichspannungsversorgung verbunden ist.

Diese Realisierung des Anschlusses der Akkumulatoren an die Gleichspannungsversorgung und des Anschlusses der Ladeeinrichtungen an die Akkumulatoren ist schaltungstechnisch besonders einfach und damit kostengünstig.

Es ist weiterhin bevorzugt, wenn die Steuereinrichtung zwischen zwei der Akkumulatoren angeschlossen ist und bei Abfall der Spannung der Gleichspannungsversorgung unter die Nennspannung die Akkumulatoren elektrisch mit der Gleichspannungsversorgung verbindet.

Durch eine solche Steuereinrichtung ist generell eine Entkopplung zwischen dem Ladebetrieb der Akkumulatoren und dem Akkumulatorbetrieb der unterbrechungsfreien Spannungsversorgungsvorrichtung möglich. Durch Anordnung der Steuereinrichtung zwischen den zwei Akkumulatoren kann eine solche Entkopplung schaltungstechnisch besonders einfach realisiert werden. Im einfachsten Fall ist die Steuereinrichtung ein Schalter, der die zwei Akkumulatoren elektrisch miteinander verbindet.

Gemäß einem weiteren bevorzugten Ausführungsbeispiel ist die Steuereinrichtung jeweils zwischen einem Akkumulator und einem zugeordneten Pol der Gleichspannungsversorgung angeschlossen und verbindet bei Abfall der Spannung der Gleichspannungsversorgung unter die Nennspannung die Akkumulatoren elektrisch mit der Gleichspannungsversorgung.

Auch in diesem Fall ist eine Entkopplung zwischen dem Ladebetrieb der Akkumulatoren und dem Akkumulatorbetrieb der unterbrechungsfreien Spannungsversorgungsvorrichtung möglich. In diesem Fall besteht die Steuereinrichtung im einfachsten Fall aus zwei Schaltern, die die in Serie geschalteten Akkumulatoren elektrisch mit dem Plus-Pol bzw. dem Minus-Pol der Gleichspannungsversorgung verbinden. Diese Anordnung ist insbesondere bei Verwendung von Blockakkumulatoren von Vorteil, die aus einer Reihe von seriell miteinander verbundenen Einzelakkumulatoren bestehen. Bei derartigen Akkumulatorblöcken ist es zwar möglich, einen Mittenabgriff zum parallelen Laden der Einzelakkumulatoren vorzusehen. Ein Schalter kann innerhalb des Akkumulatorblockes jedoch in aller Regel nicht vorgesehen werden.

Gemäß einem weiteren bevorzugten Ausführungsbeispiel ist die Ladeschlußspannung von wenigstens einem der Akkumulatoren gleich der Nennspannung der Gleichspannungsversorgung, wobei die Ladeeinrichtung für den einen Akkumulator durch einen steuerbaren Schalter gebildet ist.

Diese Ausführungsform ist besonders kostengünstig zu produzieren, da für den einen Akkumulator eine lediglich aus einem Schalter bestehende Ladeeinrichtung vorgesehen werden kann. Für den wenigstens einen weiteren Akkumulator, der gewöhnlich eine sehr viel geringere Akkumulatornennspannung aufweist, wird eine übliche Ladeeinrichtung vorgesehen, die jedoch aufgrund der geringeren Akkumulatornennspannung kleiner dimensioniert sein kann.

Es ist weiterhin von besonderem Vorzug, wenn die Ladeeinrichtung derart steuerbar ist, daß die Akkumulatoren abwechselnd geladen werden.

Diese Maßnahme basiert auf dem Gedanken, daß es zur Bereitstellung der erforderlichen Akkumulatorkapazität nicht erforderlich ist, sämtliche Akkumulatoren ständig mit der Ladeschlußspannung zu versorgen. Durch den zeitlichen Versatz des Aufladens von Akkumulatoren können die Verluste daher insgesamt minimiert werden, was insbesondere zu einer geringeren Verlustwärme führt, die bei unterbrechungsfreien Spannungsversorgungsvorrichtungen generell ein Problem darstellt.

Weiterhin ist es bevorzugt, wenn die Summe der Nennspannungen der Akkumulatoren größer ist als die Nennspannung der Gleichspannungsversorgung und wenn Schaltmittel vorgesehen sind, um im Akkumulatorbetrieb eine Anzahl von mittels der Schaltmittel auswählbaren Akkumulatoren mit der Gleichspannungsversorgung zu verbinden, deren Nennspannungssumme gleich der Nennspannung der Gleichspannungsversorgung ist.

Hierdurch wird eine hohe Redundanz erreicht, so daß beispielsweise bei Ausfall eines Akkumulators die unterbrechungsfreie Spannungsversorgung dennoch gewährleistet ist. Zum anderen kann hierdurch die Belastung der Einzelakkumulatoren verringert werden, so daß die unterbrechungsfreie Spannungsversorgungsvorrichtung insgesamt eine längere Lebensdauer aufweist.

Vorzugsweise weist die Steuereinrichtung einen Komparator auf, der die Spannung der Gleichspannungsversorgung mit einem vorbestimmten Schwellenwert vergleicht.

Durch diese Maßnahme läßt sich besonders einfach erkennen, ob ein unzulässiger Spannungsabfall der Gleichspannungsversorgung vorliegt. Gleichzeitig kann durch Auswahl eines geeigneten Schwellenwertes vermieden werden, daß die Steuereinrichtung den Akkumulatorbetrieb bei Spannungsabfällen innerhalb eines zulässigen Toleranzbereiches auslöst.

Vorzugsweise beträgt der Schwellenwert zwischen 80 und 98 %, insbesondere zwischen 85 und 95 % der Nennspannung der Gleichspannungsversorgung.

Ein solcher Schwellenwert ist für eine Vielzahl von Anwendungsfällen besonders praktikabel.

Es ist weiterhin bevorzugt, wenn die Steuereinrichtung eine Einrichtung zur Messung der Zeitdauer des Akkumulatorbetriebs der Vorrichtung aufweist.

Eine solche Zeitmeßeinrichtung gestattet das rechtzeitige Abschalten der unterbrechungsfreien Spannungsversorgungsvorrichtung vor Abfall der Akkumulatorspannung unter einen Wert, bei dem die Funktion der angeschlossenen Verbraucher nicht mehr gewährleistet werden kann. Vor dem Erreichen dieses Zustandes kann auf der Grundlage der Zeitmeßeinrichtung auch ein Warnsignal abgegeben werden.

Schließlich ist es bevorzugt, wenn die Steuereinrichtung eine Einrichtung zur optischen, akustischen und/oder elektrischen Anzeige des Akkumulatorbetriebs der Vorrichtung aufweist.

Da die Spannungsversorgung durch die erfindungsgemäße unterbrechungsfreie Spannungsversorgungsvorrichtung bei einem Ausfall der regulären Spannungsversorgung aufrechterhalten wird, kann es vorkommen, daß der Spannungsausfall gar nicht bemerkt wird. Durch die Anzeigeeinrichtung ist es einerseits möglich, das Bedienpersonal auf diesen "Störfall" hinzuweisen. Andererseits kann die Anzeige auch als Signal an eine übergeordnete Steuereinheit gegeben werden, die automatisch bestimmte Maßnahmen wie z.B. ein koordiniertes Abschalten der angeschlossenen Verbraucher einleitet.

Gemäß einer bevorzugten Ausführungsform wird der Schwellenwert des Komparators durch eine an den Gleichspannungskreis angeschlossene Zenerdiode gebildet. Zenerdioden sind aufgrund ihrer steilen Kennlinie besonders geeignet, einen vorbestimmten Schwellenwert zu bilden. Das Unterschreiten dieses Schwellenwertes löst eine Stromänderung aus, die zur Erzeugung eines Komparatorausgangssignals verwendet werden kann.

Es ist weiterhin von Vorzug, wenn die Steuereinrichtung einen elektrisch steuerbaren Schalter aufweist, der mit dem Komparator verbunden ist und bei Abfall der Spannung des Gleichspannungskreises unter den Schwellenwert die beiden Akkumulatoren seriell miteinander verbindet. Eine solche Steuereinrichtung ist schaltungstechnisch besonders einfach und damit kostengünstig zu realisieren. Vorzugsweise wird als Schalter ein Feldeffekttransistor verwendet, dessen Gate mit dem Komparator verbunden ist. Aufgrund der leistungslosen Ansteuerbarkeit ist ein Feldeffekttransistor für den genannten Einsatzzweck besonders geeignet.

Gemäß einer weiteren bevorzugten Ausführungsform weist die Steuereinrichtung eine Einrichtung zur Strombegrenzung und/oder zur Spannungsregelung auf. Insbesondere die Strombegrenzung läßt sich bei der zwischen den zwei Akkumulatoren angeschlossenen Steuereinrichtung besonders einfach realisieren. Insgesamt läßt sich durch diese Maßnahme erreichen, daß aus der unterbrechungsfreien Spannungsversorgungsvorrichtung ein begrenzter Strom und eine konstante Spannung entnommen werden können.

Vorzugsweise weist die Steuereinrichtung weiterhin eine Temperaturüberwachungseinrichtun^{g} auf, die die Vorrichtung bei Überschreiten einer vorgegebenen Temperatur ausschaltet. Durch diese Maßnahme wird eine thermische Überlastung der Vorrichtung vermieden, wodurch die Lebensdauer der erfindungsgemäßen unterbrechungsfreien Spannungsversorgungsvorrichtung erheblich verlängert wird. Eine besonders kostengünstige Temperaturüberwachung wird mit einem temperaturabhängigen Widerstand (z.B. NTC- oder PTC-Widerstand) erreicht.

Ein Ausführungsbeispiel der Erfindung ist in der beigefügten Zeichnung dargestellt und wird in der nachfolgenden Beschreibung näher erläutert. Es zeigen:
- Fig. 1: ein schematisches Blockschaltbild einer Ausführungsform der erfindungsgemäßen unterbrechungsfreien Spannungsversorgungsvorrichtung;
- Fig. 2: ein Blockschaltbild der Steuereinrichtung der unterbrechungsfreien Spannungsversorgungsvorrichtung von Fig. 1;
- Fig. 3: eine alternative Ausführungsform der erfindungsgemäßen unterbrechungsfreien Gleichspannungsversorgungsvorrichtung;
- Fig. 4: eine weitere alternative Ausführungsform der erfindungsgemäßen unterbrechungsfreien Gleichspannungsversorgungsvorrichtung;
- Fig. 5: eine weitere alternative Ausführungsform der erfindungsgemäßen unterbrechungsfreien Gleichspannungsversorgungsvorrichtung; und
- Fig. 6: eine weitere alternative Ausführungsform der erfindungsgemäßen unterbrechungsfreien Gleichspannungsversorgungsvorrichtung;

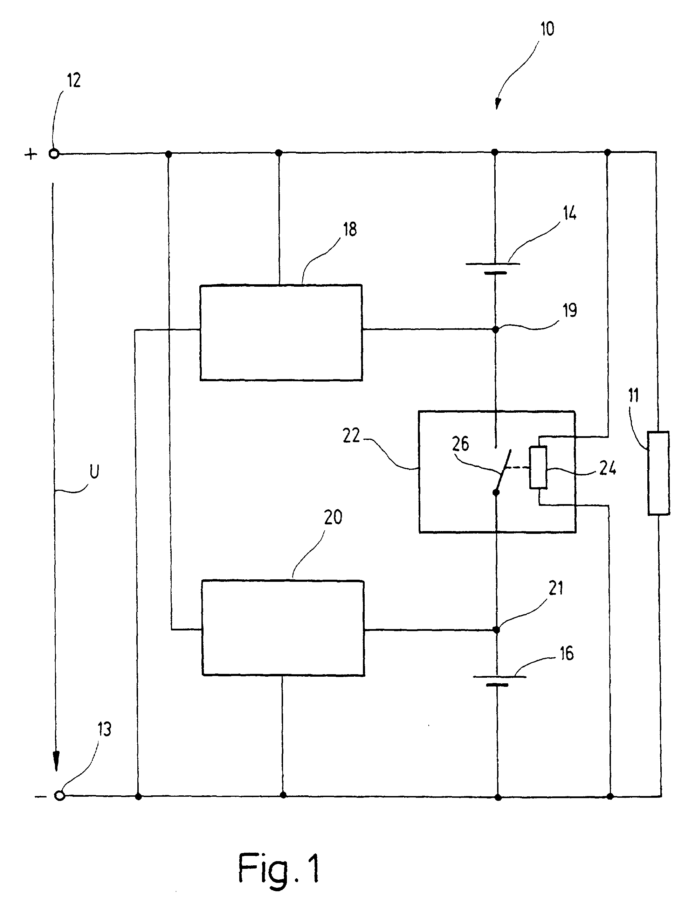

In Fig. 1 ist eine Ausführungsform der erfindungsgemäßen unterbrechungsfreien Spannungsversorgungsvorrichtung (im folgenden kurz mit USV bezeichnet) generell mit der Bezugsziffer 10 angegeben.

Die USV 10 ist an einen Gleichspannungskreis bzw. eine Gleichspannungsversorgung mit einer Plus-Klemme 12 und einer Minus-Klemme 13 (üblicherweise Masse) angeschlossen. Zwischen den Klemmen 12, 13 liegt eine Spannung U an, beispielsweise eine Nennspannung von 12 Volt oder 24 Volt.

Die USV 10 weist zwei identische Akkumulatoren 14, 16 mit jeweils der halben Nennspannung des Gleichspannungskreises 12, 13 auf. Der Akkumulator 14 ist mit seinem Plus-Pol an die Plus-Klemme 12 des Gleichspannungskreises 12, 13 angeschlossen. Der Akkumulator 16 ist mit seinem Minus-Pol an die Minus-Klemme 13 des Gleichspannungskreises 12, 13 angeschlossen.

Den Akkumulatoren 14, 16 ist jeweils eine Ladeeinrichtung 18 bzw. 20 zugeordnet. Die Ladeeinrichtungen 18, 20 sind jeweils parallel an die Klemmen 12, 13 des Gleichspannungskreises angeschlossen. Die Ladeeinrichtung 18 ist an dem Minus-Pol 19 des Akkumulators 14 angeschlossen. Die Ladeeinrichtung 20 ist an dem Plus-Pol 21 des Akkumulators 16 angeschlossen.

Zwischen dem Minus-Pol 19 des Akkumulators 14 und dem Plus-Pol 21 des Akkumulators 16 ist eine Steuereinrichtung 22 angeschlossen, die auch mit den Klemmen 12, 13 des Gleichspannungskreises verbunden ist.

In dem Gleichspannungskreis 12, 13 ist eine reguläre, nicht dargestellte Gleichspannungsquelle zur Versorgung von beliebigen elektrischen Verbrauchern vorhanden. Im folgenden sei angenommen, daß die Nennspannung dieser regulären Spannungsquelle U = 24 Volt beträgt. Selbstverständlich ist die USV 10 auch für andere Nennspannungen geeignet. Es ist auch möglich, an die Klemmen 12, 13 den Gleichstromausgang eines Wechselstrom-Gleichstromwandlers anzuschließen, so daß die USV 10 zur unterbrechungsfreien Spannungsversorgung eines Wechselspannungskreises verwendet wird. Entscheidend ist, daß an den Klemmen 12, 13 eine Spannung U anliegt, die das Verhalten der regulären, abzupuffernden Spannungsquelle reflektiert.

Bei einer Nennspannung U = 24 Volt betragen die Nennspannungen der zwei Akkumulatoren 14, 16 jeweils 12 Volt. Die Ladeeinrichtungen 18, 20 sind dazu ausgelegt, aus dieser Spannung U = 24 Volt jeweils eine Ladeschlußspannung von plus bzw. minus 13,7 Volt abzuleiten, die zum vollständigen Aufladen der Akkumulatoren 14, 16 an die entsprechenden Pole 19 bzw. 21 angelegt wird. Die Ladeeinrichtungen 18, 20 können zu diesem Zweck einen Festspannungsregler in integrierter Form aufweisen, deren jeweilige Beschaltung eine Spannung von 13,7 Volt erzeugt.

Unterschreitet die Spannung U an den Klemmen 12, 13 einen vorbestimmten Schwellenwert, so verbindet die Steuereinrichtung 22 die zwei Akkumulatoren 14, 16 seriell miteinander, so daß an den Klemmen 12, 13 die Nennspannung von 24 Volt (= 2 x 12 Volt) aufrechterhalten wird.

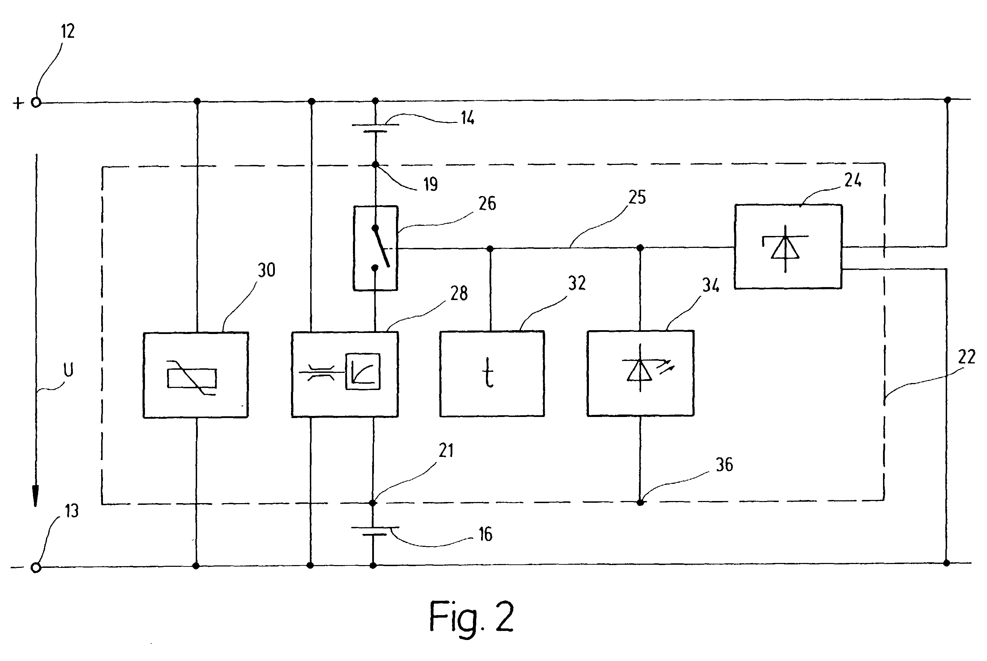

Die Funktionsweise der Steuereinrichtung 22 wird nachstehend anhand von Fig. 2 erläutert.

Wie es in Fig. 2 gezeigt ist, weist die Steuereinrichtung 22 einen mit den Klemmen 12, 13 verbundenen Komparator 24 mit einer Zenerdiode auf. Bei Unterschreiten eines vorbestimmten Schwellenwertes von z.B. U = 22 Volt wird am Ausgang des Komparators 24 ein Schaltsignal erzeugt, das mit einer Steuerleitung 25 auf einen Schalter 26 gegeben wird. Der Schalter 26 ist zwischen den Polen 19, 21 der Akkumulatoren 14 bzw. 16 angeschlossen und beispielsweise durch einen Feldeffekttransistor gebildet, wobei dessen Gate mit der Steuerleitung 25 verbunden ist. Bei eingeschaltetem Schalter 26 sind die Pole 19, 21 somit verbunden, so daß an den Klemmen 12, 13 die Summe der Akkumulatornennspannungen (2 x 12 Volt = 24 Volt) zur Verfügung steht. Aufgrund des relativ hohen Schwellenwertes von 22 Volt und aufgrund der geringen Schaltzeiten der Bauelemente des Komparators 24 und des Schalters 26 wird eine unterbrechungsfreie Spannungsversorgung der an die Klemmen 12, 13 angeschlossenen Verbraucher gewährleistet.

Eine Einrichtung 28 zur Strombegrenzung und Spannungsregelung ist zur Strombegrenzung zwischen dem Pol 21 des Akkumulators 16 und dem Schalter 26 und zur Spannungsregelung an den Klemmen 12, 13 angeschlossen.

Eine Temperaturüberwachungseinrichtung 30 ist zwischen den Klemmen 12, 13 angeschlossen und umfaßt einen NTC-Widerstand. Bei Überschreiten einer vorbestimmten, durch die Wahl des NTC-Widerstandes vorgegebenen Temperaturwertes schaltet die Temperaturüberwachungseinrichtung 30 die unterbrechungsfreie Spannungsversorgungsvorrichtung 10 ab.

An die Steuerleitung 25 ist eine Zeitmeßeinrichtung 32 angeschlossen, die die Zeitdauer des Akkumulatorbetriebs der unterbrechungsfreien Spannungsversorgungsvorrichtung 10 mißt, also die Zeitspanne, während der der Schalter 26 eingeschaltet ist. Mit der Zeitmeßeinrichtung 32 kann die unterbrechungsfreie Spannungsversorgungsvorrichtung 10 rechtzeitig abgeschaltet werden, bevor die durch die Akkumulatoren 14, 16 bereitgestellte Spannung aufgrund deren Entladung unter einen Wert fällt, mit dem die Funktionssicherheit der an die Klemmen 12, 13 angeschlossenen Verbraucher nicht mehr gewährleistet werden kann.

Schließlich ist an die Steuerleitung 25 eine Anzeigeeinrichtung 34 angeschlossen, die z.B. ein LED und/oder einen Summer aufweisen kann. Die Anzeigeeinrichtung 34 dient dazu, den Akkumulatorbetrieb der USV 10 anzuzeigen, z.B. mittels der LED. Des weiteren kann mit der Anzeigevorrichtung 34 ein elektrisches Signal an einem Ausgangsanschluß 36 erzeugt werden, das den Akkumulatorbetrieb anzeigt. Mit dem Signal am Ausgangsanschluß 36 kann eine übergeordnete Steuereinheit (nicht dargestellt) veranlaßt werden, ein koordiniertes Abschalten der angeschlossenen Verbraucher einzuleiten. Zu diesem Zweck kann auch die durch die Zeitmeßeinrichtung 32 ermittelte Dauer des Akkumulatorbetriebs an die Steuereinheit übermittelt werden.

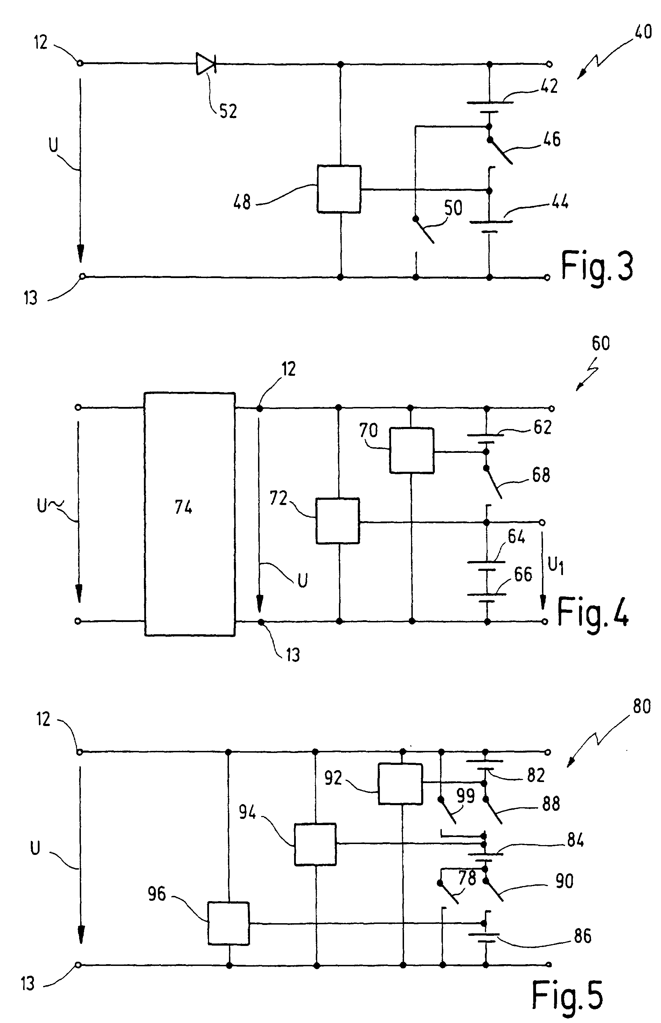

In den Figuren 3 bis 6 sind alternative Ausführungsformen von erfindungsgemäßen unterbrechungsfreien Spannungsversorgungsvorrichtungen gezeigt.

In diesen Ausführungsformen sind aus Gründen einer übersichtlicheren Darstellung anstelle von Steuereinrichtungen jeweils Schalter gezeigt. Es versteht sich jedoch, daß diese Schalter genauso oder entsprechend aufgebaut sein können wie die in den Figuren 1 und 2 gezeigte Steuereinrichtung 22.

Die in Fig. 3 gezeigte USV 40 weist zwei Akkumulatoren 42, 44 auf, die über einen Schalter 46 seriell miteinander verbunden sind. Die Anordnung aus den zwei Akkumulatoren 42, 44 und dem Schalter 46 ist parallel an die Gleichspannungsversorgung 12, 13 angeschlossen.

Ein Schalter 50 ist zwischen dem negativen Pol des Akkumulators 42 und dem negativen Pol 13 der Gleichspannungsversorgung 12, 13 angeschlossen. Der Akkumulator 42 hat eine Ladeschlußspannung, die gleich der Nennspannung U der Gleichspannungsversorgung 12, 13 ist. Der Schalter 50 bildet daher eine Ladeeinrichtung für den Akkumulator 42. Für den Akkumulator 44 ist eine übliche Ladeeinrichtung 48 vorgesehen, die beispielsweise der Ladeeinrichtung 20 von Fig. 1 entspricht, jedoch für eine sehr viel geringere Ladeschlußspannung ausgelegt ist.

Eine Diode 52 ist vorgesehen, um im Akkumulatorbetrieb den Lastabschnitt von dem Versorgungsabschnitt 12, 13 zu trennen. Eine solche Diode 52 kann auch bei allen anderen Ausführungsformen der Erfindung eingesetzt werden.

Zur Verdeutlichung des oben Gesagten sei angenommen, daß die Nennspannung U der Gleichspannungsversorgung 12, 13 24 Volt beträgt. In diesem Fall könnte die Nennspannung des Akkumulators 42 20 Volt betragen und die Ladeschlußspannung 24 Volt. Die Nennspannung des Akkumulators 44 beträgt in diesem Fall 4 Volt, so daß die Ladeeinrichtung 48 eine Ladeschlußspannung von z.B. 4,8 Volt bereitstellt.

Die Akkumulatoren 42, 44 können auch aus einer Anzahl von Einzelzellen aufgebaut sein. Beispielsweise kann eine Einzelzelle mit einer Nennspannung von 2 Volt und einer Ladeschlußspannung von 2,35 bis 2,4 Volt vorgesehen werden. Der Akkumulator 42 besteht in diesem Fall aus zehn solcher Einzelzellen. Der Akkumulator 44 besteht in diesem Fall aus zwei solcher Einzelzellen.

Die in Fig. 4 dargestellte USV 60 weist drei Akkumulatoren 62, 64, 66 auf. Zwischen den Akkumulatoren 64 und 62 ist ein Schalter 68 angeschlossen. Die Akkumulatoren 64, 66 sind seriell miteinander verbunden. Der negative Pol des Akkumulators 66 ist mit dem negativen Pol 13 der Gleichspannungsversorgung 12, 13 verbunden. Der positive Pol des Akkumulators 62 ist mit dem positiven Pol 12 der Gleichspannungsversorgung 12, 13 verbunden. Es sind weiterhin zwei Ladeeinrichtungen 70, 72 vorgesehen, deren Funktionsweise den Ladeeinrichtungen 18, 20 der Fig. 1 entspricht. Die Ladeeinrichtung 70 ist zwischen dem Schalter 68 und dem Akkumulator 62 angeschlossen. Die Ladeeinrichtung 72 ist zwischen dem Schalter 68 und dem Akkumulator 64 angeschlossen.

Weiterhin ist ein Wechselstrom-Gleichstromwandler 74 vorgesehen, der zwischen einer Wechselspannung U~ und den Polen 12, 13 angeschlossen ist. Hierdurch soll verdeutlicht werden, daß die erfindungsgemäßen unterbrechungsfreien Spannungsversorgungsvorrichtungen auch zur Abpufferung von Wechselspannungen geeignet sind, sofern ein geeigneter Wechselstrom-Gleichstromwandler vorgesehen ist.

Weiterhin ist in Fig. 4 gezeigt, daß zwischen dem negativen Pol 13 der Gleichspannungsversorgung und dem positiven Pol des Akkumulators 64 auch eine Spannung U₁ abgegriffen werden kann, die kleiner ist als die Nennspannung U der Gleichspannungsversorgung 12, 13.

Eine weitere Ausführungsform einer erfindungsgemäßen unterbrechungsfreien Spannungsversorgungsvorrichtung 80 ist in Fig. 5 gezeigt.

Die USV 80 weist drei Akkumulatoren 82, 84, 86 auf. Zwischen den Akkumulatoren 82, 84 ist ein Schalter 88 angeschlossen.

Zwischen den Akkumulatoren 84, 86 ist ein Schalter 90 angeschlossen. Es sind weiterhin drei Ladeeinrichtungen 92, 94, 96 vorgesehen. Die Ladeeinrichtung 92 ist zwischen dem Schalter 88 und dem Akkumulator 82 angeschlossen. Die Ladeeinrichtung 94 ist zwischen dem Schalter 88 und dem Akkumulator 84 angeschlossen. Die Ladeeinrichtung 96 ist zwischen dem Schalter 90 und dem Akkumulator 86 angeschlossen.

Weiterhin ist ein Schalter 98 vorgesehen, der zwischen dem negativen Pol des Akkumulators 84 und dem negativen Pol 13 der Gleichspannungsversorgung 12, 13 angeschlossen ist.

Während der regulären Spannungsversorgung sind die Schalter 88, 90 geöffnet. Die Akkumulatoren 82, 86 werden durch die Ladeeinrichtungen 92, 96 ständig geladen. Der Akkumulator 84 wird geladen, sobald der Schalter 98 geschlossen ist.

Während des Ladevorganges kann bei Auftreten einer hohen Temperatur in der unterbrechungsfreien Spannungsversorgung 80 der Schalter 98 geöffnet werden, um den Ladevorgang des Akkumulators 84 zu unterbrechen und hierdurch die entstehende Verlustwärme zu vermindern.

Es versteht sich jedoch, daß die lediglich schematisch angedeuteten Ladeeinrichtungen 92 bis 96 jeweils auch mit "Ein/Aus-Schaltern" versehen sein können, um die Akkumulatoren 82, 84, 86 zeitlich abwechselnd und/oder lediglich phasenweise zu laden, um die Verluste der USV 80 gering zu halten.

In Fig. 5 ist weiterhin ein Schalter 99 gezeigt, der zwischen dem positiven Pol des Akkumulators 84 und dem positiven Pol 12 der Gleichspannungsversorgung 12, 13 angeschlossen ist. Dieser Schalter wird optional für den Fall vorgesehen, daß die Summe der Nennspannungen der Akkumulatoren 82, 84, 86 größer ist als die Nennspannung U der Gleichspannungsversorgung 12, 13. Beispielsweise könnte die Nennspannung U der Gleichspannungsversorgung 12, 13 U = 24 Volt betragen und die Nennspannung der Akkumulatoren 82, 84, 86 jeweils 12 Volt. In diesem Fall werden im Akkumulatorbetrieb entweder die Schalter 88, 98 geschlossen oder die Schalter 90, 99, so daß jeweils nur zwei der Akkumulatoren 82, 84, 86 für den Akkumulatorbetrieb eingesetzt werden. Diese Schaltungsvariante basiert also auf dem Prinzip der Redundanz. Falls einer der Akkumulatoren 82, 86 ausfallen sollte, kann die unterbrechungsfreie Spannungsversorgung über den Akkumulator 84 und den nicht ausgefallenen Akkumulator der Akkumulatoren 82, 86 aufrechterhalten werden.

Es versteht sich, daß die gezeigte Art der Beschaltung lediglich schematischer Natur ist, um dieses Grundprinzip zu verdeutlichen. So könnte beispielsweise auch ein weiterer Schalter parallel zu dem Akkumulator 84 angeschlossen werden, um diesen bei dessen Ausfall überbrücken zu können und die Spannungsversorgung mittels der Akkumulatoren 82, 86 im Akkumulator aufrechtzuerhalten.

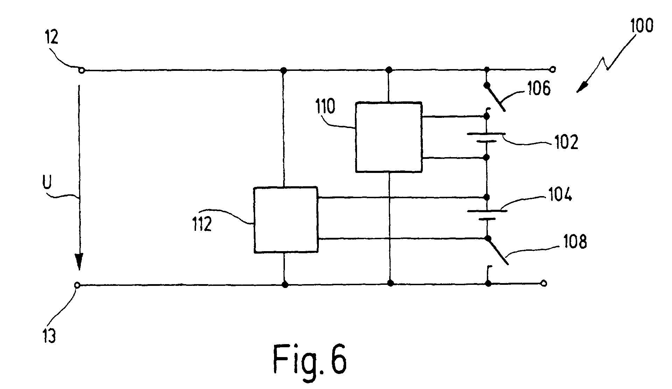

Die in Fig. 6 gezeigte Ausführungsform einer erfindungsgemäßen USV 100 umfaßt zwei Akkumulatoren 102, 104 sowie zwei Schalter 106, 108. Der Schalter 106 ist zwischen dem positiven Pol des Akkumulators 102 und dem positiven Pol 12 der Gleichspannungsversorgung 12, 13 angeschlossen. Der Schalter 108 ist zwischen dem negativen Pol des Akkumulators 104 und dem negativen Pol 13 der Gleichspannungsversorgung 12, 13 angeschlossen.

Es sind zwei Ladeeinrichtungen 110, 112 vorgesehen, die im Gegensatz zu den Ladeeinrichtungen 18, 20 der Fig. 1 jeweils nicht nur an einem Pol der Akkumulatoren 102, 104 angeschlossen sind, sondern jeweils an beiden Polen der Akkumulatoren 102, 104.

Der Grund hierfür liegt darin, daß während des Ladebetriebes die Schalter 106, 108 geöffnet sind.

Die USV 100 entspricht somit weitestgehend der USV 10 aus Fig. 1. Anstelle des einen Schalters 26 sind vorliegend zwei Schalter 106, 108 vorgesehen. Diese Ausführungsform ist insbesondere dann vorteilhaft, wenn die Akkumulatoren 102, 104 in Form eines Akkumulatorblockes vorliegen, so daß zwischen diesen zwar eine Anschlußfahne zum Anschluß der Ladeeinrichtungen 110, 112 vorgesehen sein kann, ein Schalter jedoch nicht oder nur unter größerem baulichen Aufwand anzuschließen ist. Die USV 100 kann daher außerordentlich kompakt ausgebildet werden.

## Patentansprüche

1. Unterbrechungsfreie Spannungsversorgungsvorrichtung (10; 40; 60; 80; 100) zum Anschluß an eine, eine Nennspannung bereitstellende Gleichspannungsversorgung (12, 13), mit
- wenigstens zwei Akkumulatoren (14, 16; 42, 44; 62-66; 82-86; 102, 104), die jeweils eine Akkumulatornennspannung und eine Ladeschlußspannung besitzen, die größer ist als die jeweilige Akkumulatornennspannung, und die im Akkumulatorbetrieb miteinander in Serie geschaltet mit der Gleichspannungsversorgung (12, 13) verbunden sind,
- wenigstens zwei aus der Gleichspannungsversorgung (12, 13) gespeisten Ladeeinrichtungen (18, 20; 48, 50; 70, 72; 92-96; 110, 112) für die Akkumulatoren, und
- einer elektrischen Steuereinrichtung (22; 46; 68; 88, 90; 106, 108), die die Akkumulatoren (14, 16; 42, 44; 62-66; 82-86; 102, 104) elektrisch mit der Gleichspannungsversorgung (12, 13) verbindet, um die Spannungsversorgung von daran angeschlossenen elektrischen Verbrauchern (11) im Akkumulatorbetrieb unterbrechungsfrei aufrechtzuerhalten,
für jeden der Akkumulatoren (14, 16; 42, 44; 62, 64-66; 82, 84, 86; 102, 104) vorhandenen Ladeeinrichtungen (18, 20; 48, 50; 70, 72; 92, 94, 69; 110, 112) separat ausgebildet sind und jeweils eine feste Spannung in Höhe der jeweiligen Ladeschlußspannungen der jeweiligen Akkumulatoren (14, 16; 102, 104) bereitstellen.

2. Vorrichtung nach Anspruch 1, **dadurch gekennzeichnet, daß** die Vorrichtung (10; 100) zwei Akkumulatoren (14, 16; 102, 104) aufweist, deren Akkumulatornennspannung jeweils die halbe Nennspannung der Gleichspannungsversorgung (12, 13) beträgt.

3. Vorrichtung nach Anspruch 1 oder 2, **dadurch gekennzeichnet, daß** eine Ladeeinrichtung (18) zwischen einem negativen Pol (19) des einen Akkumulators (14) und der Steuereinrichtung (22) und eine weitere Ladeeinrichtung (20) zwischen einem positiven Pol (21) des zweiten Akkumulators (16) und der Steuereinrichtung (22) angeschlossen ist und daß ein positiver Pol des einen Akkumulators (14) mit einem positiven Pol (12) des Gleichspannungskreises (12, 13) und ein negativer Pol des zweiten Akkumulators (16) mit einem negativen Pol (13) des Gleichspannungskreises (12, 13) verbunden ist.

4. Vorrichtung nach einem der Ansprüche 1 bis 3, **dadurch gekennzeichnet, daß** die Steuereinrichtung (22; 46; 68; 88, 90) zwischen zwei der Akkumulatoren (14, 16; 42, 44; 62, 64; 82, 84 bzw. 84, 86) angeschlossen ist und bei Abfall der Spannung der Gleichspannungsversorgung (12, 13) unter die Nennspannung (U) die Akkumulatoren elektrisch mit der Gleichspannungsversorgung (12, 13) verbindet.

5. Vorrichtung nach einem der Ansprüche 1 bis 4, **dadurch gekennzeichnet, daß** die Steuereinrichtung (106, 108) jeweils zwischen einem Akkumulator (102, 104) und einem zugeordneten Pol (12, 13) der Gleichspannungsversorgung (12, 13) angeschlossen ist und bei Abfall der Spannung der Gleichspannungsversorgung (12, 13) unter die Nennspannung (U) die Akkumulatoren (102, 104) elektrisch mit der Gleichspannungsversorgung (12, 13) verbindet.

6. Vorrichtung nach Anspruch 1, 4 oder 5, **dadurch gekennzeichnet, daß** die Ladeschlußspannung von wenigstens einem (42) der Akkumulatoren (42, 44) gleich der Nennspannung (U) der Gleichspannungsversorgung (12, 13) ist und daß die Ladeeinrichtung (50) für den einen Akkumulator (42) durch einen steuerbaren Schalter (50) gebildet ist.

7. Vorrichtung nach einem der Ansprüche 1 bis 6, **dadurch gekennzeichnet, daß** die Ladeeinrichtung (92-96) derart steuerbar ist, daß die Akkumulatoren (82-86) abwechselnd geladen werden.

8. Vorrichtung nach einem der Ansprüche 1 oder 5 bis 7, **dadurch gekennzeichnet, daß** die Summe der Nennspannungen der Akkumulatoren (82-86) größer ist als die Nennspannung (U) der Gleichspannungsversorgung (12, 13) und daß Schaltmittel (98, 99) vorgesehen sind, um im Akkumulatorbetrieb eine Anzahl von mittels der Schaltmittel (98, 99) auswählbaren Akkumulatoren mit der Gleichspannungsversorgung (12, 13) zu verbinden, deren Nennspannungssumme gleich der Nennspannung (U) der Gleichspannungsversorgung (12, 13) ist.

9. Vorrichtung nach einem der Ansprüche 1 bis 8, **dadurch gekennzeichnet, daß** die Steuereinrichtung (22) einen Komparator (24) aufweist, der die Spannung der Gleichspannungsversorgung (12, 13) mit einem vorbestimmten Schwellenwert vergleicht.

10. Vorrichtung nach Anspruch 9, **dadurch gekennzeichnet, daß** der Schwellenwert zwischen 80 und 98 %, vorzugsweise zwischen 85 und 95 % der Nennspannung der Gleichspannungsversorgung beträgt.

11. Vorrichtung nach einem der Ansprüche 1 bis 10, **dadurch gekennzeichnet, daß** die Steuereinrichtung (22) eine Einrichtung (32) zur Messung der Zeitdauer des Akkumulatorbetriebs der Vorrichtung (10) aufweist.

12. Vorrichtung nach einem der Ansprüche 1 bis 11, **dadurch gekennzeichnet, daß** die Steuereinrichtung (22) eine Einrichtung (34) zur optischen, akustischen und/oder elektrischen Anzeige des Akkumulatorbetriebes der Vorrichtung (10) aufweist.

13. Verfahren zum Betreiben einer unterbrechungsfreien Stromversorgungsvorrichtung (10; 40; 60; 80; 100) gemäß einem der Ansprüche 1 bis 12, **dadurch gekennzeichnet, daß** die Akkumulatoren (14, 16; 42, 44; 62-66; 82-86; 102, 104) in einem Ladebetrieb mit separaten Ladeeinrichtungen (18, 20; 48, 50; 70, 72; 92, 96; 110, 112) mit einer Festspannung in Höhe ihrer jeweiligen Ladeschlußspannung geladen werden, daß ein Komparator (24) die Spannung der Gleichspannungsversorgung mit einem vorbestimmten Schwellenwert vergleicht, und daß die Akkumulatoren (14, 16; 42, 44; 62-66; 82-86; 102, 104) bei Unterschreiten des Schwellenwertes in einen Akkumulatorbetrieb geschaltet werden, in dem sie seriell miteinander verbunden an die Gleichspannungsversorgung angeschlossen sind.

## Claims

1. An uninterruptable power supply apparatus (10; 40; 60; 80; 100) for connection with a direct voltage supply (12, 13) providing a nominal voltage, comprising:
- at least two accumulators (14, 16; 42, 44; 62-66; 82-86; 102, 104) each having a nominal accumulator voltage and an end-of-charging voltage which is higher than the respective nominal accumulator voltage, wherein said at least two accumulators, during accumulator operation, are connected serially to each other and are connected to said direct voltage supply (12, 13),
- at least two charging devices (18, 20; 48, 50; 70, 72; 92-96; 110, 112) for the accumulators, said charging devices being supplied from the direct voltage supply (12, 13), and
- an electrical control device (22; 46; 68; 88, 90; 106, 108) which, during accumulator operation, connects the accumulators (14, 16; 42, 44; 62-66; 82-86; 102, 104) electrically with the direct voltage supply (12, 13) in order to maintain uninterruptedly the voltage supply of electrical loads (11) connected thereto,
**characterized in that**
the charging devices (18, 20; 48, 50; 70, 72; 92, 94, 96; 110, 112) provided for each of the accumulators (14, 16; 42, 44; 62, 64-66; 82, 84, 86; 102, 104) are formed separately from each other and each provide a fixed voltage in the amount of the respective end-of-charging voltages of the respective accumulators (14, 16; 102, 104).

2. The apparatus of claim 1, **characterized in that** the apparatus (10; 100) comprises two accumulators (14, 16; 102, 104), wherein the nominal accumulator voltage of each of the two accumulators is equal to half of the nominal voltage of the direct voltage supply (12, 13).

3. The apparatus of claim 1 or 2, **characterized in that** one charging device (18) is connected between a negative terminal (19) of one accumulator (14) and the control device (22), and a further charging device (20) being connected between a positive terminal (21) of the second accumulator (16) and the control device (22), and that a positive terminal of the one accumulator (14) is connected with a positive terminal (12) of the direct voltage circuit (12, 13), a negative terminal of the second accumulator (16) being connected with a negative terminal (13) of the direct voltage circuit (12, 13).

4. The apparatus of any of claims 1 to 3, **characterized in that** the control device (22; 46; 68; 88, 90) is connected between two of the accumulators (14, 16; 42, 44; 62, 64; 82, 84, and 84, 86 respectively), and that the control device connects the accumulators electrically with the direct voltage supply (12, 13) if the voltage of the direct voltage supply (12, 13) drops below the nominal voltage (U).

5. The apparatus of any of claims 1 to 4, **characterized in that** the control device (106, 108) is respectively connected between an accumulator (102, 104) and an associated terminal (12, 13) of the direct voltage supply (12, 13), and that the control device connects the accumulators (102, 104) electrically with the direct voltage supply (12, 13), if the voltage of the direct voltage supply (12, 13) drops below the nominal voltage (U).

6. The apparatus of claim 1, 4 or 5, **characterized in that** the end-of-charging voltage of at least one (42) of said accumulators (42, 44) is identical to the nominal voltage (U) of the direct voltage supply (12, 13), and that the charging device (50) for said one accumulator (42) is formed by a controllable switch (50).

7. The apparatus of any of claims 1 to 6, **characterized in that** the charging device (92-96) can be controlled such that the accumulators (82-86) are alternately charged.

8. The apparatus of any of claims 1 or 5 to 7, **characterized in that** the sum of the nominal voltages of the accumulators (82-86) is larger than the nominal voltage (U) of the direct voltage supply (12, 13), and that switch means (98, 99) are provided in order to connect a number of accumulators that can be selected via the switch means (98,99), with the direct voltage supply (12, 13), wherein the sum of the nominal voltages of the number of accumulators is identical to the nominal voltage (U) of the direct voltage supply (12, 13).

9. The apparatus of any of claims 1 to 8, **characterized in that** the control device (22) comprises a comparator (24) that compares the voltage of the direct voltage supply (12, 13) with a predetermined threshold value.

10. The apparatus of claim 9, **characterized in that** the threshold value is identical to between 80 and 98 %, preferably between 85 and 95 % of the nominal voltage of the direct voltage supply.

11. The apparatus of any of claims 1 to 10, **characterized in that** the control device (22) comprises a device (32) for measuring the time period of the accumulator operation of the apparatus (10).

12. The apparatus of any of claims 1 to 11, **characterized in that** the control device (22) comprises a device (34) for optical, acoustical and/or electrical display of the accumulator operation of the apparatus (10).

13. A method for operating an uninterruptable power supply apparatus (10; 40; 60; 80; 100) according to any of claims 1 to 12, **characterized in that** the accumulators (14, 16; 42, 44; 62-66; 82-86; 102, 104) are charged, in a charging operation, with separate charging devices (18, 20; 48, 50; 70, 72; 92, 96; 110, 112) having a fixed voltage in the amount of the respective end-of-charging voltage, **in that** a comparator (24) compares the voltage of the direct voltage supply with a predetermined threshold value, and **in that** the accumulators (14, 16; 42, 44; 62-66; 82-86; 102, 104) are switched into an accumulator operation, if the voltage drops below the threshold value, wherein the accumulators, in the accumulator operation, are connected in series with each other to the direct voltage supply.

## Revendications

1. Dispositif d'alimentation en tension sans interruption (10 ; 40 ; 60 ; 80 ; 100) destiné à être branché sur une alimentation en tension continue (12, 13) délivrant une tension nominale, avec
- au moins deux accumulateurs (14, 16 ; 42, 44 ; 62-66 ; 82-86 ; 102, 104) qui possèdent chacun une tension nominale d'accumulateur et une tension finale de charge qui est supérieure à la tension nominale d'accumulateur respective, et qui sont reliés entre eux en série avec l'alimentation en tension continue (12, 13) en mode accumulateur,
- au moins deux dispositifs de charge (18, 20 ; 48, 50 ; 70, 72 ; 92-96 ; 110, 112) alimentés depuis l'alimentation en tension continue (12, 13) pour les accumulateurs, et
- un dispositif de commande électrique (22 ; 46 ; 68 ; 88, 90 ; 106, 108) qui relie électriquement les accumulateurs (14, 16; 42, 44; 62-66 ; 82-86 ; 102, 104) à l'alimentation en tension continue (12, 13) afin de maintenir sans interruption l'alimentation en tension de consommateurs (11) raccordés électriquement à elle en mode accumulateur,
**caractérisé en ce que** les dispositifs de charge (18, 20 ; 48, 50 ; 70, 72 ; 92, 94, 96 ; 110, 112) prévus pour chacun des accumulateurs (14, 16 ; 42, 44 ; 62, 64-66 ; 82, 84, 86 ; 102, 104) sont conformés séparément et délivrent chacun une tension fixe égale à la tension finale de charge des accumulateurs respectifs (14, 16 ; 102, 104).

2. Dispositif selon la revendication 1, **caractérisé en ce que** le dispositif (10 ; 100) présente deux accumulateurs (14, 16 ; 102, 104) dont la tension nominale d'accumulateur est égale à la moitié de la tension nominale de l'alimentation en tension continue (12, 13).

3. Dispositif selon la revendication 1 ou 2, **caractérisé en ce qu'**un dispositif de charge (18) est branché entre un pôle négatif (19) du premier accumulateur (14) et le dispositif de commande (22) et un autre dispositif de charge (20) est branché entre un pôle positif (21) du deuxième accumulateur (16) et le dispositif de commande (22), et **en ce qu'**un pôle positif du premier accumulateur (14) est relié à un pôle négatif (12) du circuit de tension continue (12, 13) et un pôle négatif du deuxième accumulateur (16) est relié à un pôle négatif (13) du circuit de tension continue (12, 13).

4. Dispositif selon l'une des revendications 1 à 3, **caractérisé en ce que** le dispositif de commande (22 ; 46 ; 68 ; 88, 90) est branché entre deux des accumulateurs (14, 16 ; 42, 44 ; 62, 64 ; 82, 84 resp. 84, 86) et, en cas de chute de la tension de l'alimentation en tension continue (12, 13) au-dessous de la tension nominale (U), relie électriquement les accumulateurs à l'alimentation en tension continue (12, 13).

5. Dispositif selon l'une des revendications 1 à 4, **caractérisé en ce que** le dispositif de commande (106, 108) est branché à chaque fois entre un accumulateur (102, 104) et un pôle associé (12, 13) de l'alimentation en tension continue (12, 13) et, en cas de chute de la tension de l'alimentation en tension continue (12, 13) au-dessous de la tension nominale (U), relie électriquement les accumulateurs (102, 104) à l'alimentation en tension continue (12, 13).

6. Dispositif selon la revendication 1, 4 ou 5, **caractérisé en ce que** la tension de charge finale d'au moins l'un (42) des accumulateurs (42, 44) est identique à la tension nominale (U) de l'alimentation en tension continue (12, 13) et **en ce que** le dispositif de charge (50) pour le premier accumulateur (42) est formé par un commutateur (50) commandable.

7. Dispositif selon l'une des revendications 1 à 6, **caractérisé en ce que** le dispositif de charge (92-96) est commandable de telle manière que les accumulateurs (82-86) sont chargés en alternance.

8. Dispositif selon l'une des revendications 1 ou 5 à 7, **caractérisé en ce que** la somme des tensions nominales des accumulateurs (82-86) est supérieure à la tension nominale (U) de l'alimentation en tension continue (12, 13) et **en ce que** des moyens de commutation (98, 99) sont prévus afin, en mode accumulateur, de relier à l'alimentation en tension continue (12, 13) plusieurs des accumulateurs sélectionnables par les moyens de commutation (98, 99), dont la somme des tensions nominales est égale à la tension nominale (U) de l'alimentation en tension continue (12, 13).

9. Dispositif selon l'une des revendications 1 à 8, **caractérisé en ce que** le dispositif de commande (22) présente un comparateur (24) qui compare la tension de l'alimentation en tension continue (12, 13) à une valeur de seuil prédéterminée.

10. Dispositif selon la revendication 9, **caractérisé en ce que** la valeur de seuil vaut entre 80 et 98 %, de préférence entre 85 et 95 % de la tension nominale de l'alimentation en tension continue.

11. Dispositif selon l'une des revendications 1 à 10, **caractérisé en ce que** le dispositif de commande (22) présente un moyen (32) pour mesurer la durée du mode accumulateur du dispositif (10).

12. Dispositif selon l'une des revendications 1 à 11, **caractérisé en ce que** le dispositif de commande (22) présente un dispositif (34) de signalisation optique, acoustique et/ou électrique du mode accumulateur du dispositif (10).

13. Procédé pour faire fonctionner un dispositif d'alimentation en courant sans interruption (10 ; 40 ; 60 ; 80 ; 100) selon l'une des revendications 1 à 12, **caractérisé en ce que** les accumulateurs (14, 16 ; 42, 44 ; 62-66 ; 82-86 ; 102, 104) sont chargés dans un mode de charge avec des dispositifs de charge séparés (18, 20 ; 48, 50 ; 70, 72 ; 92, 96 ; 110, 112) à une tension fixe égale à leur tension de charge finale respective, **en ce qu'**un comparateur (24) compare la tension de l'alimentation en tension continue à une valeur de seuil prédéterminée, et **en ce qu'**en cas de dépassement vers le bas de la valeur de seuil, les accumulateurs (14, 16 ; 42, 44 ; 62-66 ; 82-86 ; 102, 104) sont commutés dans un mode accumulateur, dans lequel ils sont reliés en série et raccordés à l'alimentation en tension continue.
